# EUROPEAN PATENT APPLICATION

(11) **EP 1 356 947 A1**
(43) Date of publication of application: **29.10.2003**
(21) Application number: 03252161.9
(22) Date of filing: 04.04.2003
(51) Int. Cl.: B41J 2/315, B41J 2/32, B41J 29/17

(54) **A thermal activation device for heat-sensitive self-adhesive sheet and a printer using the same**

(30) Priority: 22.04.2002 JP 2002119674
(71) Applicant: SII P & S Inc., Chiba-shi, Chiba (JP)
(72) Inventor: Ito, Akihiko, c/o SII P & S Inc, Chiba-shi, Chiba (JP); Yoshida, Shinichi, c/o SII P & S Inc, Chiba-shi, Chiba (JP); Hoshino, Minoru, c/o SII P & S Inc, Chiba-shi, Chiba (JP); Sato, Yoshinori, c/o SII P & S Inc, Chiba-shi, Chiba (JP)
(74) Representative: Sturt, Clifford Mark

(57) **Abstract**

Providing a thermal activation device (50) for heat-sensitive self-adhesive label (60) and a printer including the same, the thermal activation device accomplishing an easy and efficient thermal activation of a heat-sensitive adhesive layer by means of heating means (51,52) and including cleaning means capable of readily removing remainders of heat-sensitive adhesive mass and the like transferred to the heating means. There is also provided a conveyance means (53) which is disposed in opposing relation with the heating means for pressing the heat-sensitive self-adhesive sheet against the heating means and for conveying the heat-sensitive self-adhesive sheet in a predetermined direction.

## Description

The present invention relates to a thermal activation device for heat-sensitive self-adhesive sheet and a printer employing the same, the heat-sensitive self-adhesive sheet which comprises a sheet-like substrate formed with a heat-sensitive adhesive layer on one side thereof normally presenting a non-adhesion property but developing an adhesion property when heated, and which is used as, for example, a peel-and-stick self-adhesive label. More particularly, the invention relates to a cleaning technique for removing a heat-sensitive adhesive mass and its metamorphosed products.

Many of the peel-and-stick self-adhesive labels recently used for indication of bar codes, prices and the like are of a type which includes a pressure-sensitive adhesive layer laid over a back side of a receiving surface (printable surface) and a release sheet (separator) affixed thereto for storage. Unfortunately, the self-adhesive labels of this type have a drawback of inevitably producing wastes because the release sheets must be removed from the pressure-sensitive adhesive layers before the self-adhesive labels are used.

As a system obviating the release sheet, there have been developed a heat-sensitive self-adhesive label comprising a label-like substrate and a heat-sensitive adhesive layer which is formed on a back side of the substrate and which normally presents a non-adhesion property but develops an adhesion property when heated, and a thermal activation device for developing the adhesion property of the heat-sensitive adhesive layer by heating.

With regard to the thermal activation devices proposed heretofore, a variety of heating systems are employed which include a heat roll system, hot air heating system, infrared radiation system, induction coil heating system and the like. For instance, Japanese Unexamined Patent Publication No.11(1999)-79152 discloses a technique wherein a head is provided with one or more resistance elements (heating element) as a heat source on a ceramic substrate, just like a thermal head used as a print head of a thermal printer, and is brought into contact with the heat-sensitive self-adhesive label for heating the heat-sensitive adhesive layer thereof.

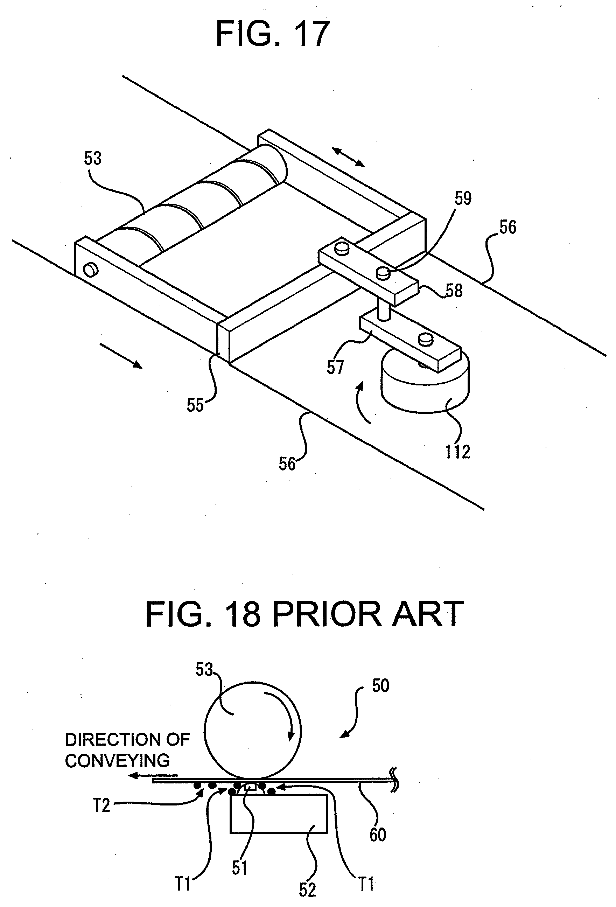

Fig. 18 is a diagram showing an exemplary arrangement of a thermal activation device for heat-sensitive adhesive layer disclosed in the above Japanese Unexamined Patent Publication No.11(1999)-79152. The thermal activation device comprises a thermally activating platen roller 53 as conveyance means for conveying a heat-sensitive self-adhesive label 60, and a thermally activating thermal head 52 having a heat generating element 51 as heating means. The heat generating element 51 comprises a heat generating resistance element which is formed on a ceramic substrate and is formed with a protective layer of crystallized glass on its surface. It is noted that the thermally activating platen roller 53 also serves as a pressing element for clamping the heat-sensitive self-adhesive label 60 between itself and the heat generating element 51.

The above technique of the prior application is advantageous in that the heat-sensitive adhesive layer is assuredly activated because the heat generating element 51 as the heating means is in contact with the heat-sensitive adhesive layer and energized for heat generation, and in that power consumption is low because of an efficient heat transfer from the heat generating element 51 to the heat-sensitive adhesive layer.

However, the aforementioned thermal activation device has a drawback that since the heat-sensitive adhesive layer is exposed on one side of the heat-sensitive self-adhesive label, apart of the heat-sensitive adhesive layer, softened by heating, adheres to the heating means (heat generating element 51) and a vicinity thereof. Particularly in the case of the aforementioned thermal head employing the heating means wherein the heat generating element 51 contacts the heat-sensitive adhesive layer for direct heating, a separated heat-sensitive adhesive mass as represented by a reference character T1 in Fig. 18 may adhere to the thermal head. As such adhered masses are gradually accumulated, the conductivity of heat from the heat generating element 51 to the heat-sensitive adhesive layer will be lowered, so that the heat-sensitive adhesive mass is unable to develop a sufficient adhesion property when heated for the same period of time. In this case, a sufficient thermal activation may be accomplished by extending the heating time. However, the increase of the heating time leads to problems of an increased power consumption and a complicated control operation.

In addition, the above Japanese Unexamined Patent Publication No.11(1999)-79152 discloses a technique wherein the heat generating element 51 is disposed near an edge or at a corner edge or an end face of the thermally activating thermal head 52 thereby preventing the thermally activated heat-sensitive adhesive layer from being transferred to the thermal head 52. However, the heat generating element 51 necessarily contacts the activated heat-sensitive adhesive mass and hence, a substantial adherence of the adhesive mass remainder to the heating means and the vicinity thereof cannot be avoided.

If a printing operation is continued in a state where the adhesive mass remainders are adhered to the elements, the mass remainders as represented by a reference character T2 in Fig. 18 are re-transferred to the label to reduce the adhesive power thereof. On the other hand, the adhesive mass remainders on the vicinity of the heat generating element 51 are heated over and over again so as to be carbonized after a lapse of a long period of time. This results in a problem that the carbonized adhesive masses are hard to remove.

Hence, a cleaning operation need be performed periodically for removing the remainders of the heat-sensitive adhesive mass and the like adhered to the heat generating element 51. However, the cleaning operation requires substantial labor and time because the thermal head must be removed from the thermal activation device 50 before it is cleaned. During the cleaning operation, the printing operation must be suspended for relatively long hours while the power supply to the heat generating element 51 must be cut off. Thus, a continuous operation of the printer is impossible.

It is an object of the invention to provide a thermal activation device for heat-sensitive self-adhesive sheet and a printer which permit the heating means to accomplish an easy and efficient thermal activation of the heat-sensitive adhesive layer and which provide for an easy removal of the remainders of the heat-sensitive adhesive mass and the like transferred to the heating means.

The invention is accomplished for achieving the above object and provides a thermal activation device for heat-sensitive self-adhesive sheet at least comprising: heating means for thermal activation which activates by heating a heat-sensitive adhesive layer of a heat-sensitive self-adhesive sheet comprising a sheet-like substrate formed with a printable surface on one side thereof and with the heat-sensitive adhesive layer on the other side thereof; and conveyance means which is disposed in opposing relation with the heating means for conveying the heat-sensitive self-adhesive sheet in a predetermined direction as clamping the sheet between itself and the heating means, the thermal activation device further including cleaning means for removing a heat-sensitive adhesive mass and its metamorphosed products remaining on the heating means for thermal activation.

This ensures that the heating means is always maintained in a state free from the adherence of the remainders of the heat-sensitive adhesive mass and its metamorphosed products. Therefore, the heating means is not lowered in heat conductivity despite repeated operations thereof over an extended period of time. This negates the need for extending heating time, resulting in the reduction of power consumption. Although the cleaning means requires a maintenance work, the work is easier than a maintenance work for cleaning the heating means and may be performed less frequently. Thus, the thermal activation device contributes to the reduction of labor cost and also permits the extension of continuous operation time when applied to a printer.

The cleaning means comprises a remainder removing roller substantially of a cylindrical shape, a surface of which is processed for removing the remaining heat-sensitive adhesive mass and its metamorphosed products, the remainder removing roller disposed orthogonally to the direction of conveying the heat-sensitive self-adhesive sheet and rotated as pressed against the heating means thereby removing the remaining heat-sensitive adhesive mass and its metamorphosed products. Thus, the remainders adhered to the area of the heating means can be efficiently removed by the remainder removing roller, the surface of which is so processed as to be inclined to attract the remainders.

The remainder removing roller may preferably be formed with grooves in its surface. As to the configuration of the grooves, there may be contemplated longitudinal grooves extended along a rotating direction of the roller; transverse grooves extended axially of the roller; a groove extended in a spiral form; grid-like grooves as a combination of the above longitudinal grooves and transverse grooves; random grooves formed at random and the like.

The remainder removing roller may preferably be formed with projections on its surface. As to the configuration of the projections, there may be contemplated projections shaped like a square column, a triangular column or a semi-cylinder which are extended axially of the roller; and thorn-like projections in the form of a cone, triangular pyramid and the like.

The remainder removing roller is more inclined to attract the remainders by forming the grooves or projections at the surface thereof or by roughening the surface thereof. Accordingly, the remainder removing roller can efficiently remove the remainders adhered to the surface of the heating means.

The cleaning means may have an arrangement wherein the remainder removing roller is allowed to pivot back and forth as pressed against the heating means. This arrangement ensures that even remainders scatteringly adhered to a periphery of a heat source of the heating means can be removed.

It is preferred that the remainder removing roller is formed of a material, such as rubber, plastic, urethane, fluorine resin, silicone resin or the like, which has a lower hardness than that of a material forming a contact portion of the heating means but a higher hardness than those of the remainders. This provides for the removal of the remainders without damaging the heat source of the heating means.

The heating means for thermal activation comprises a thermal head including one or more heat generating elements arranged in parallel whereas the conveyance means comprises a rotatable platen roller operative to convey the heat-sensitive adhesive sheet as clamping the sheet between itself and the thermal head, and adapted to function as the remainder removing roller. This negates the need for adding an additional component as the cleaning means so that the device is not increased in size.

In a case where the remainder removing roller and the platen roller are independently provided, an arrangement may preferably be made such that the platen roller for conveyance and the remainder removing roller are disposed in parallel relation and can be replaced with each other by means of a revolver type rotary mechanism. The arrangement minimizes the size increase of the device associated with the provision of the cleaning means and can implement the cleaning means in a relatively simple construction.

Embodiments of the invention will now be described by way of further example only and with reference to the accompanying drawings, in which:
Fig. 1 is a schematic diagram showing an exemplary arrangement of a thermal activation device according to the invention and a thermal printer employing the same;
Fig. 2 is an enlarged view explanatory of a principal part of the thermal activation device;
Fig. 3 is a block diagram showing an exemplary arrangement of a control system of the thermal printer;
Fig. 4 is a side view and front view showing one example of a thermally activating platen roller 53 formed with grooves in its surface;
Fig. 5 is a side view and front view showing another example of the thermally activating platen roller 53 formed with grooves in its surface;
Fig. 6 is a side view and front view showing another example of the thermally activating platen roller 53 formed with grooves in its surface;
Fig. 7 is a side view and front view showing another example of the thermally activating platen roller 53 formed with grooves in its surface;
Fig. 8 is a side view and front view showing another example of the thermally activating platen roller 53 formed with grooves in its surface;
Fig. 9 is a side view and front view showing another example of the thermally activating platen roller 53 formed with grooves in its surface;
Fig. 10 is a side view and front view showing one example of a thermally activating platen roller 53 formed with projections on its surface;
Fig. 11 is a side view and front view showing another example of the thermally activating platen roller 53 formed with projections on its surface;
Fig. 12 is a side view and front view showing another example of the thermally activating platen roller 53 formed with projections on its surface;
Fig. 13 is a side view and front view showing another example of the thermally activating platen roller 53 formed with projections on its surface;
Fig. 14 is a side view and front view showing another example of the thermally activating platen roller 53 formed with projections on its surface;
Fig. 15 is a side view and front view showing another example of the thermally activating platen roller 53 formed with projections on its surface;
Fig. 16 is a side view and front view showing another example of the thermally activating platen roller 53 formed with projections on its surface;
Fig. 17 is a perspective view showing one example of a pivotal mechanism for the thermally activating platen roller 53; and
Fig. 18 is a diagram explanatory of a principal part of a conventional thermal activation device.

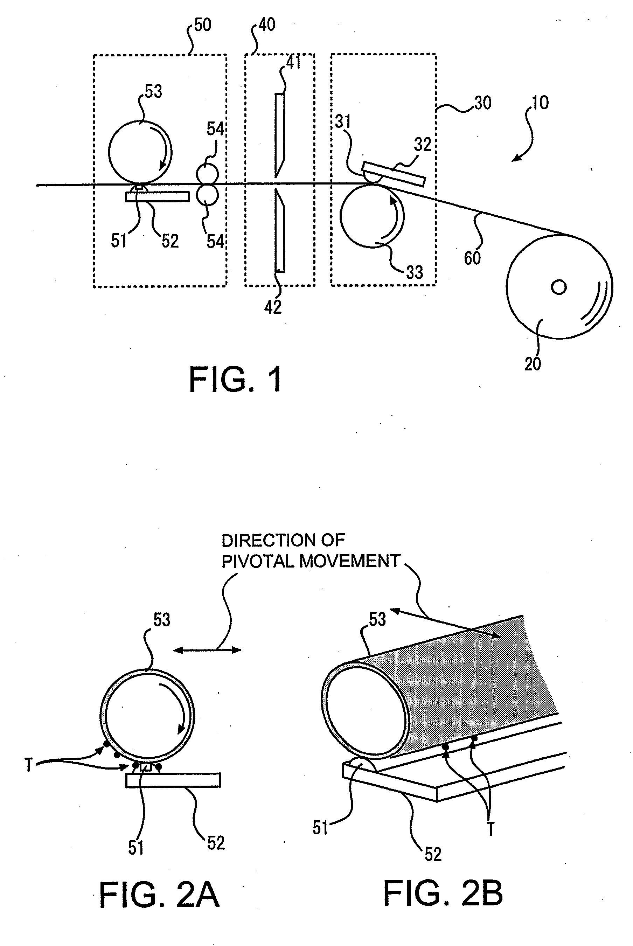

Fig. 1 is a schematic diagram showing an arrangement of a thermal activation device according to the invention and a thermal printer 10 using the same. The thermal printer 10 comprises a roll container unit 20 for holding a heat-sensitive self-adhesive label 60 in the form of a tape wound into a roll; a printing unit 30 for printing the heat-sensitive self-adhesive label 60; a cutter unit 40 for cutting the heat-sensitive self-adhesive label 60 in a predetermined length; and a thermal activation unit 50 as the thermal activation device for thermally activating a heat-sensitive adhesive layer of the heat-sensitive self-adhesive label 60.

Although the structure of the heat-sensitive self-adhesive label 60 used in the embodiment is not particularly limited, the label 60 may have a structure, for example, wherein a heat insulating layer and a heat-sensitive color developing layer are formed on a front surface (printable surface) of a label substrate whereas the heat-sensitive adhesive layer is formed on a back surface of the substrate by applying a heat-sensitive adhesive mass thereto followed by drying. It is noted that the heat-sensitive adhesive layer comprises a heat-sensitive adhesive mass based on a thermoplastic resin, a solid plastic resin or the like. The heat-sensitive self-adhesive label 60 may obviate the aforesaid heat insulating layer or may further include a protective layer or a colored print layer (previously printed layer) overlaid on the heat-sensitive color developing layer.

The printing unit 30 comprises a printing thermal head 32 having a plurality of heat generating elements 31 comprising a plurality of relatively small resistance elements arranged along a widthwise direction in order to provide for dot printing; a printing platen roller 33 pressed against the printing thermal head 32; and the like. The heat generating elements 31 are arranged the same way as in the print head of the known thermal printer wherein a plurality of heat generating resistance elements are formed on a ceramic substrate and a protective layer of crystallized glass is overlaid on a surface of the resistance elements.

The printing unit 30 further includes an unillustrated drive system which comprises, for example, an electric motor, an array of gears and the like and drives the printing platen roller 33 into rotation. The drive system rotates the printing platen roller 33 in a predetermined direction thereby unwinding the heat-sensitive self-adhesive label 60 from the roll and conveying the unwound heat-sensitive self-adhesive label 60 along the predetermined direction as allowing the printing thermal head 32 to print thereon. According to Fig. 1, the printing platen roller 33 is rotated counter-clockwise so that the heat-sensitive self-adhesive label 60 is conveyed toward the left side.

The printing unit 30 further includes unillustrated pressure means which comprises, for example, a helical coil spring, leaf spring or the like. The printing thermal head 32 is biased against the printing platen roller 33 by a spring force of the pressure means. In this case, the printing thermal head can be uniformly pressed against the heat-sensitive self-adhesive label 60 across the overall width thereof by maintaining a rotary axis of the printing platen roller 33 in parallel with a direction of the array of the heat generating elements 31.

The cutter unit 40 is for cutting the heat-sensitive self-adhesive label 60 printed by the printing unit 30 in a suitable length. The cutter unit comprises a movable cutting blade 41 operated by a drive source (not shown) such as of an electric motor, and a stationary cutting blade 42 opposed by the movable blade.

The thermal activation unit 50 comprises the thermally activating thermal head 52 as the heating means having the heat generating element 51; the thermally activating platen roller 53 as the conveyance means for conveying the heat-sensitive self-adhesive label 60; insertion rollers 54 which are rotated, for example, by an unillustrated drive source to feed the heat-sensitive self-adhesive label 60, supplied from the printing unit 30, into space between the thermally activating thermal head 52 and the thermally activating platen roller 53.

This embodiment employs the thermally activating thermal head 52 of the same structure as that of the printing thermal head 32. That is, the thermal head is constructed the same way as the print head of the known thermal printer wherein a plurality of heat generating resistance elements are formed on the ceramic substrate and the protective layer of crystallized glass is overlaid on the surface of the resistance elements. However, the heat generating elements 51 of the thermally activating thermal head 52 need not be divided on a dot basis like those of the printing head and may be in the form of a continuous resistance element. The embodiment may employ the thermally activating thermal head 52 of the same structure as that of the printing thermal head 32 so that the common thermal heads can be shared between them for achieving cost reduction.

The thermal activation unit 50 further includes a drive system which comprises, for example, an electric motor, an array of gears and the like and drives the thermally activating platen roller 53 into rotation. The drive system rotates the thermally activating platen roller 53 in the opposite direction (clockwise as seen in Fig. 1) to the rotation of the printing platen roller 33 thereby conveying the heat-sensitive self-adhesive label 60 along the predetermined direction (leftward).

The thermal activation unit 50 further includes pressure means (for example, a helical coil spring, leaf spring or the like) for biasing the thermally activating thermal head 52 against the thermally activating platen roller 53. In this case, the thermal head can be uniformly pressed against the heat-sensitive self-adhesive label 60 across the overall width thereof by maintaining a rotary axis of the thermally activating platen roller 53 in parallel with a direction of the heat generating element 51.

The thermal activation unit 50 of the invention further includes cleaning means for removing the remainders of the heat-sensitive adhesive mass and metamorphosed products thereof which remain on the heat generating element 51 and the vicinity thereof. Fig. 2 is an enlarged view of the thermal activation unit 50. According to the embodiment, the cleaning function is provided at the thermally activating platen roller 53.

The printing platen roller 33 provided at the printing unit has its outer peripheral surface formed of an elastic member, such as rubber or the like, which is free from surface irregularities. According to the embodiment, a surface (side surface) of the thermally activating platen roller 53 is subjected to any of various surface processings, so as to be adapted for removal of the remainders T adhered to the areas of the heat generating element 51 and thermally activating thermal head 52. The thermally activating platen roller 53 may be designed to pivot along a direction of conveying the heat-sensitive self-adhesive label 60 thereby efficiently removing the remainders T on the heat generating element 51 and the vicinity thereof. A surface configuration of the thermally activating platen roller 53 and a pivotal mechanism therefor will be described hereinlater.

The thermally activating platen roller 53 is formed of a material, such as rubber, plastic, urethane, fluorine resin, silicone resin or the like, which has a lower hardness than that of a material for the heat generating element 51 but a higher hardness than those of the remainders T. This provides for the removal of the remainders T without damaging the heat generating element 51 as the heating means.

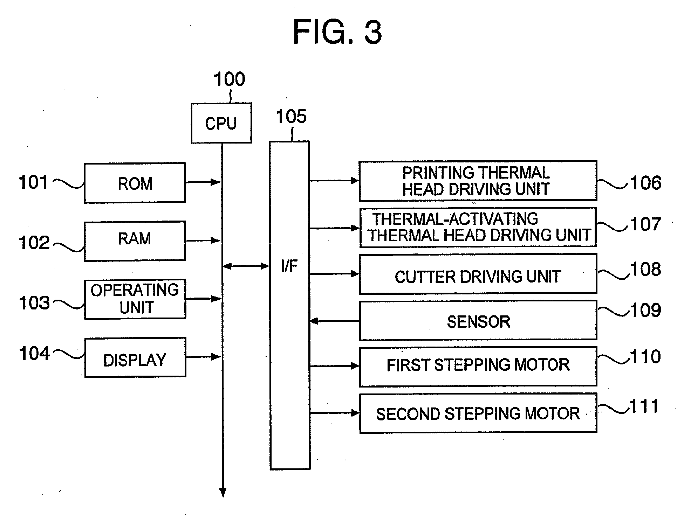

Fig. 3 is a control block diagram of the thermal printer 10. A control section of the printer 10 comprises a CPU 100 for governing the control section; a ROM 101 for storing a control program and the like executed by the CPU 100; a RAM 102 for storing a variety of print formats and the like; an operation unit 103 for inputting, defining or retrieving print data, print format data and the like; a display unit 104 for display of the print data and the like; an interface 105 responsible for input or output of data between the control unit and drive components; a drive circuit 106 for driving the printing thermal head 32; a drive circuit 107 for driving the thermally activating thermal head 52; a drive circuit 108 for driving the movable blade 41 for cutting the heat-sensitive self-adhesive label 60; a sensor 109 for detecting discharge or the like of the heat-sensitive self-adhesive label 60; a first stepping motor 110 for driving the printing platen roller 33; and a second stepping motor 111 for driving the thermally activating platen roller 53.

The printing unit 30 performs a desired printing based on a control signal transmitted from the CPU 100. The cutter unit 40, in turn, performs a cutting operation at a predetermined timing while the thermal activation unit 50 activates the heat-sensitive adhesive layer.

The aforementioned thermal printer 10 performs printing operations as follows. Firstly, the heat-sensitive self-adhesive label 60 is unwound by the rotation of the printing platen roller 33 of the printing unit 30 so that a printable surface (heat-sensitive color developing layer) of the label is thermally printed by means of the thermal head. Subsequently, the heat-sensitive self-adhesive label 60 is conveyed to the cutter unit 40 by way of the rotation of the printing platen roller 33 so as to be cut in a predetermined length by means of the movable blade 41 operated at a predetermined timing.

Then, the heat-sensitive self-adhesive label 60 thus cut off is fed into the thermal activation unit 50 by means of the insertion rollers 54 of the thermal activation unit 50. As clamped between the thermally activating thermal head 52 (heat generating element 51) and the thermally activating platen roller 53, the heat-sensitive adhesive layer is heated by the heat generating element 51 energized at a predetermined timing. Thus, the heat-sensitive adhesive layer of the heat-sensitive self-adhesive label 60 is activated to develop the adhesive power. Subsequently, the heat-sensitive self-adhesive label 60 is discharged by way of the rotation of the thermally activating platen roller 53 and thus, a sequence of printing operations is completed.

A discharge detection sensor (not shown) for detecting the discharge of a heat-sensitive self-adhesive label 60 may be disposed on an upstream or downstream side of the thermal activation unit 50 such that the printing, conveying and thermally activating operations for the subsequent heat-sensitive self-adhesive label 60 are performed based on the discharge of the heat-sensitive self-adhesive label 60 detected by the detection sensor.

According to the aforementioned thermal printer 10, the heat generating element 51 of the thermally activating thermal head 52 is in contact with the heat-sensitive adhesive layer of the heat-sensitive self-adhesive label 60 and hence, the heat-sensitive adhesive layer can be efficiently activated by virtue of direct heat transfer from the heat generating element 51 to the heat-sensitive adhesive layer. Furthermore, the heat generating element 51 of the thermally activating thermal head 52 can generate heat for thermal activation only when it is energized, thus consuming a reduced energy for thermal activation.

Even if some of the thermally activated heat-sensitive adhesive layer of the heat-sensitive self-adhesive label 60 adheres to the heat generating element 51 or the vicinity thereof to form the remainders T, the remainders T may be readily removed by the following operation.

Specifically, when the heat-sensitive self-adhesive label 60 is discharged from the thermal activation unit 50, a part of the heat-sensitive adhesive layer of the label 60, softened by heating, is squeezed out as pressed between the thermally activating platen roller 53 and the thermally activating thermal head 52 to be separated from the substrate of the label 60 and adheres to the heat generating element 51 or the vicinity thereof. However, the thermally activating platen roller 53 is rotated as pressed against the heat generating element 51 so as to remove or attract the remainders T on the heat generating element 51 and the vicinity thereof. Thus, the heat generating element 51 may be cleaned of the remainders. For instance, a thermally activating platen roller 53 formed with grooves can remove the remainders T as follows. The platen roller 53 directly contacts the thermally activating thermal head 52 thereby allowing the remainders T on the thermally activating thermal head 52 to enter the grooves formed in the surface of the thermally activating platen roller 53.

The operation for removing the remainders T is performed during a period between the discharge of a heat-sensitive self-adhesive label 60 from the thermal activation unit 50 and an infeed of the subsequent printed heat-sensitive self-adhesive label 60 to the thermal activation unit 50, or during a predetermined period of time after the discharge of the heat-sensitive self-adhesive label 60 from the thermal activation unit 50. In this manner, the thermal activation unit 50 performs the operation for removing the remainders T while the subsequent heat-sensitive self-adhesive label 60 is subjected to the printing operation or cutting operation, whereby the need for suspending the printing operation or cutting operation is negated. As a result, the total throughput of the thermal printer 10 is not decreased.

However, in a case where high-speed continuous printing operations cannot afford time for the removal operation after the discharge of the heat-sensitive self-adhesive label 60 from the thermal activation unit 50, the rotation of the printing platen roller 33 of the printing unit 30 and the printing operation by the thermal head may be temporarily suspended for removal of the remainders. In this case, the operation of removing the remainders T may be performed at every activation of the label or at an interval of a predetermined number of activation operations.

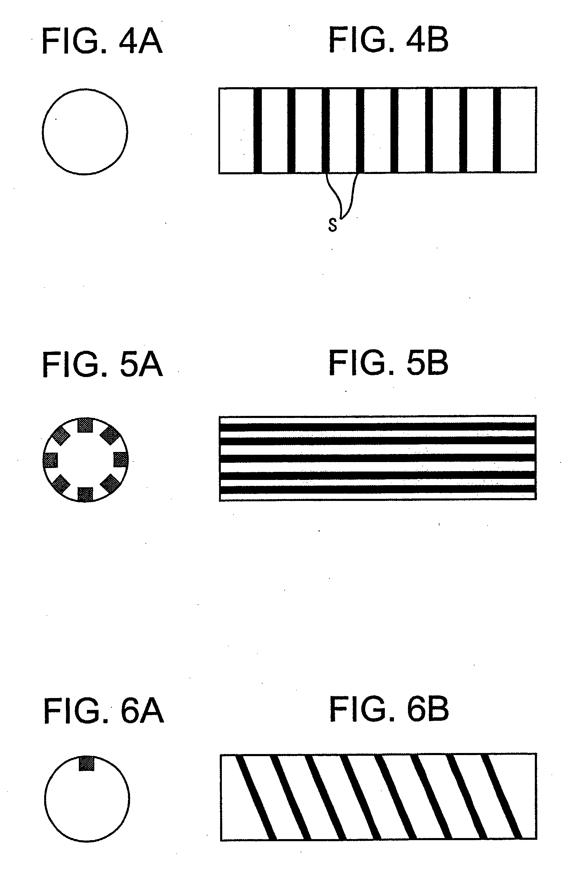

Next, the surface configuration of the thermally activating platen roller 53 is described in detail with reference to Figs. 4 to 16.

Fig. 4 illustrates an example of the thermally activating platen roller 53 formed with grooves in its surface for the purpose of removing the remainders. In this example, a plurality of parallel longitudinal grooves S are extended along the direction of conveying the heat-sensitive self-adhesive label 60. Fig. 4A is a plan view of the thermally activating platen roller 53 as viewed along its axis, whereas Fig. 4B is a side view thereof as viewed along the direction of conveying the heat-sensitive self-adhesive label 60. The grooves Shave, for example, a depth of 2 mm, a width of 2 mm and an interspace (pitch) of 2 mm.

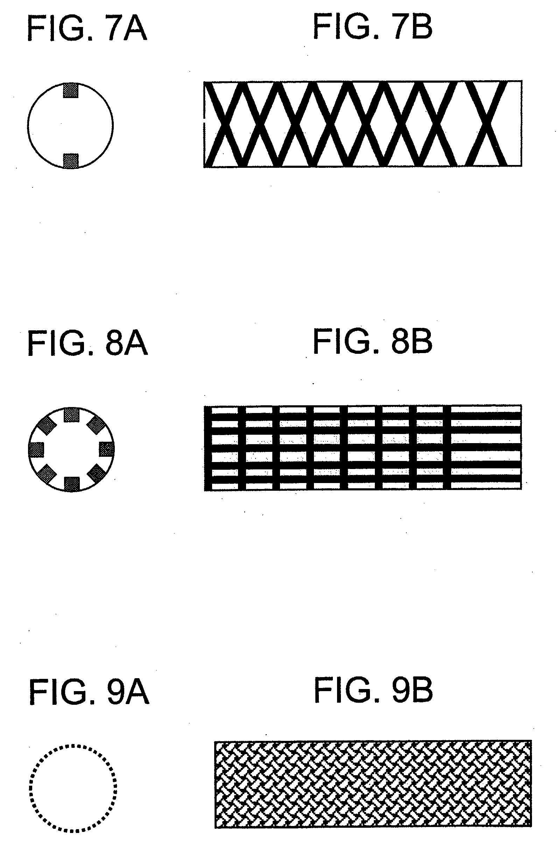

Figs. 5 to 9 each show another example of the thermally activating platen roller 53 formed with grooves in its surface. Fig. 5 illustrates the platen roller formed with a plurality of parallel transverse grooves extended axially of the heat-sensitive self-adhesive label 60. Fig. 6 illustrates the thermally activating platen roller 53 formed with a single spiral groove in its surface. Fig. 7 illustrates the thermally activating platen roller 53 formed, in its surface, with two spiral grooves intersecting each other. Fig. 8 illustrates the thermally activating platen roller 53 formed with a grid-like grooves in its surface. Fig. 9 illustrates the thermally activating platen roller 53 formed with crosshatched grooves in its surface. Although not shown in Figs. 4 to 9, the roller surface may be formed with random grooves or recesses. The depth and width of the groove may be set at optimum values based on collected experimental data, the number of grooves and the like.

As described above, any of the various grooves may be formed in the surface (side surface) of the thermally activating platen roller 53 for effectively removing the remainders T of the adhesive mass and the like which adhere to the heat generating element 51 and the vicinity thereof. Particularly in a case where the groove is formed in a manner to locate its start point and end point at a respective end of the thermally activating platen roller 53, as shown in Figs. 6 and 7, there may be expected an effect that the remainders of the adhesive mass and the like in the grooves are moved along the grooves toward the outer sides of the roller as the thermally activating platen roller 53 rotates, thus automatically pushed out of the ends of the roller to be discharged. This saves labor for cleaning the roller so that a maintenance work becomes much easier.

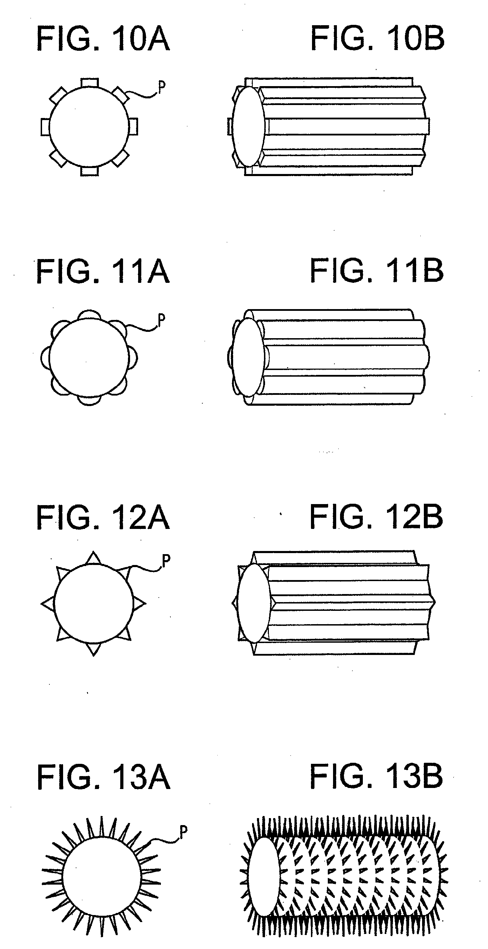

Figs. 10 to 16 each show an example of the thermally activating platen roller 53 a surface of which is formed with projections for removing the remainders. Fig. 10 illustrates the platen roller 53 formed with a plurality of projections P on its surface, which are shaped like a square column and extended axially. The roller having the projections P of such a shape may be obtained using, for example, an extruder which extrudes a resin material through an extrusion die to from the product.

Fig. 11 illustrates the thermally activating platen roller 53, a surface of which is formed with a plurality of semi-cylindrical projections P extended axially. The semi-cylindrical projections P may be obtained by forming the projections shaped like a square column shown in Fig. 10 and then grinding or machining the projections with a machine tool such as a grinder or cutting tool.

Fig. 12 illustrates the thermally activating platen roller 53, a surface of which is formed with a plurality of projections P which are shaped like a triangular column and extended axially. Such projections P shaped like the triangular column may be formed by transfer molding wherein dies are pressed against the roll surface to transfer the die shapes to a resin material.

Fig. 13 illustrates the thermally activating platen roller 53, a surface of which is formed with a plurality of thorn-like projections P. The platen roller having the projections P of such a shape may be obtained by independently forming the roller and thorn-like members, applying an adhesive to the surface of the platen roller, and then applying a voltage to the platen roller for causing the roller to electrostatically attract the thorn-like members. Otherwise, the thorn-like projections may be formed on the roller surface by spark erosion.

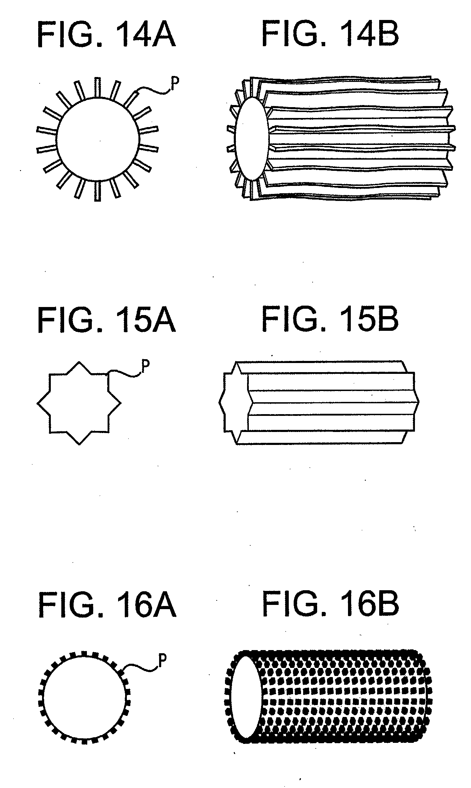

Fig. 14 illustrates the thermally activating platen roller 53, a surface of which is formed with a plurality of rib-like projections P extended axially. The platen roller having such rib-like projections P may be obtained by independently forming the roller and rib-like members, and applying an adhesive to an end face of each rib-like member for bonding the rib-like member to the surface of the platen roller.

Fig. 15 illustrates the thermally activating platen roller 53, a surface of which is formed with a plurality of projections P shaped like a triangular column and extended axially in parallel with one another. The projections are resemblent to those of Fig. 12 but differ therefrom in that the projections of Fig. 12 define a wide pitch therebetween whereas adjoining projections of Fig. 15 have their bottom sides contacted with each other. The projections P of such a shape may be formed by deforming a cylindrical platen roller member by pressing a mold there against with heating.

Fig. 16 illustrates the thermally activating platen roller 53, the overall surface of which is formed with warty projections P. The platen roller having such warty projections P may be obtained by injection molding wherein a powdery resin material is injected into a mold and solidified by applying heat and pressure.

As described above, the projections P having any of the various shapes as illustrated by Figs. 10 to 16 may be formed on the surface (periphery) of the thermally activating platen roller 53 thereby achieving an effective removal of the remainders T of the adhesive mass and the like adhered to the heat generating element 51 and the vicinity thereof. It is noted that the projections P may desirably be formed from the same material that forms the thermally activating platen roller 53.

The surface processings performed on the surface (periphery) of the thermally activating platen roller 53 for the purpose of removing the remainders T are not limited to those forming the configurations illustrated by Figs. 4 to 16. For instance, the surface may be ground to a suitable roughness. Furthermore, the methods for forming the thermally activating platen rollers 53 having the projections P illustrated by Figs. 10 to 16 are not limited to those of the foregoing embodiment.

For the removal of the remainders T by way of the aforesaid projection members P, a remainder removing roller may be provided independently from the thermally activating platen roller 53. This is because it is difficult for the thermally activating platen roller 53 having the projections on its surface to press the heat-sensitive self-adhesive label uniformly against the heat generating element 51 so that the heat-sensitive self-adhesive layer may not be uniformly heated.

In the above case where the remainder removing roller is provided independently from the thermally activating platen roller 53, an arrangement may be made such that the thermally activating platen roller 53 and the remainder removing roller are disposed in parallel while a revolver type rotary mechanism and a motor are provided. The arrangement permits the thermally activating platen roller 53 and the remainder removing roller to replace with each other so that either one of the rollers can oppose the thermally activating thermal head 52. The arrangement minimizes the size increase of the device associated with the provision of the cleaning means and can also implement the cleaning means in a relatively simple construction.

Next, a second embodiment of the invention will be described with reference to Fig. 17. The second embodiment has an arrangement wherein the thermally activating platen roller 53 is provided with a mechanism for pivoting the platen roller 53 back and forth.

As shown in Fig. 17, the thermally activating platen roller 53 of the embodiment is retained between opposite arms of a U-shaped frame 55, which is coupled with a rotary axis of a motor 112 via two linking members 57, 58. More specifically, the two linking members 57, 58 have respective one end thereof rotatably coupled with each other via a pin 59, having the other end thereof rotatably fixed to the rotary axis of the motor 112 and to a central portion of the frame 55, respectively. On the other hand, the frame 55 is movably mounted on rails 56 so that the rotation of the motor 112 is converted into an anteroposterior movement of the frame 55. That is, the embodiment uses the rails 56 to limit the pivotal movement of the thermally activating platen roller 53 to the direction of conveying the heat-sensitive self-adhesive label 60. Incidentally, the motor 112 is fixed to place by means of a suitable member not shown.

The pivotal mechanism shown in Fig. 17 is arranged such that when the motor 112 is activated and its motor axis rotates clockwise, for example, the thermally activating platen roller 53 retained by the frame 55 is moved along the rails 56 toward or away from the motor 112. Therefore, the thermally activating platen roller 53 can be pivotally moved along the label conveying direction by continuously rotating the motor 112.

In this manner, the thermally activating platen roller 53 pressed against the heat generating element 51 can be pivotally moved, thereby more effectively removing the remainders T on the heat generating element 51 and the vicinity thereof than a case where the roller is not pivotally moved. Needless to say, it is desirable to operate the aforementioned pivotal mechanism while rotating the thermally activating platen roller 53 during the removal of the remainders T adhered to the heat generating element 51 and the vicinity thereof.

The invention accomplished by the inventors has been specifically described with reference to the embodiments thereof. However, it is to be noted that the invention is not limited to the above embodiments and various modifications and changes may be made thereto within the scope of the invention.

For instance, the foregoing embodiments illustrate the application of the invention to the thermal printing apparatus such as a thermal printer. However, the invention is also applicable to printing apparatuses of a thermal transfer system, ink-jet recording system, laser printing system and the like. In such cases, labels having their printable surfaces subjected to processings suitable for the respective printing systems are used in the place of the label having the thermal print layer formed on its printable surface.

The above embodiments illustrate the example where the invention is applied to the cleaning means for removing the remainders T adhered to the heat generating element 51 and the vicinity thereof in the thermal activation unit 50. The same arrangement may also be applied to cleaning means for removing remainders of ink or toner adhered to the heat generating element 31 and the vicinity thereof in the printing unit 30.

According to the invention, the thermal activation device for heat-sensitive self-adhesive sheet at least comprising heating means for thermal activation which activates by heating a heat-sensitive adhesive layer of a heat-sensitive self-adhesive sheet comprising a sheet-like substrate formed with a printable surface on one side thereof and with the heat-sensitive adhesive layer on the other side thereof; and conveyance means which is disposed in opposing relation with the heating means for pressing the heat-sensitive self-adhesive sheet against the heating means and for conveying the heat-sensitive self-adhesive sheet in a predetermined direction, the thermal activation device further includes cleaning means for removing a heat-sensitive adhesive mass and its metamorphosed products remaining on the heating means for thermal activation. Therefore, the invention provides effects of reducing the amount of the remainders of the heat-sensitive adhesive mass and the like adhered to the surface of the heating means and of developing a sufficient adhesive power of the heat-sensitive adhesive mass by a short energizing of the heating means because the heating means is not lowered in heat conductivity despite the repeated operations thereof over an extended period of time.

Although the cleaning means requires a maintenance work, the work is easier than a maintenance work for cleaning the heating means and may be performed less frequently. Thus, the invention contributes to the labor cost reduction and also permits the extension of continued operation time when applied to the printer.

## Claims

1. A thermal activation device for heat-sensitive self-adhesive sheet comprising:
heating means for thermal activation activating by heating a heat-sensitive adhesive layer of a heat-sensitive self-adhesive sheet comprising a sheet-like substrate formed with a printable surface on one side thereof and with the heat-sensitive adhesive layer on the other side thereof;
conveyance means being disposed in opposing relation with the heating means for conveying the heat-sensitive self-adhesive sheet in a predetermined direction as clamping the sheet between itself and the heating means; and
cleaning means for removing a heat-sensitive adhesive mass and its metamorphosed products remaining on the heating means for thermal activation.

2. A thermal activation device according to Claim 1, wherein the cleaning means comprises a remainder removing roller substantially of a cylindrical shape, a surface of which is processed for removing the remaining heat-sensitive adhesive mass and its metamorphosed products, and wherein the remainder removing roller is disposed orthogonally to the direction of conveying the heat-sensitive self-adhesive sheet and rotated as pressed against the heating means thereby removing the remaining heat-sensitive adhesive mass and its metamorphosed products.

3. A thermal activation device according to Claim 2, wherein the remainder removing roller is formed with grooves in its surface.

4. A thermal activation device according to Claim 2, wherein the remainder removing roller is formed with projections on its surface.

5. A thermal activation device according to Claims 2, wherein the cleaning means has an arrangement wherein the remainder removing roller is allowed to pivot back and forth as pressed against the heating means.

6. A thermal activation device according to Claims 2, wherein the remainder removing roller is formed of a material having a lower hardness than that of a material forming a contact portion of the heating means but a higher hardness than those of the remainders.

7. A thermal activation device according to Claims 2, wherein the heating means for thermal activation comprises a thermal head including one or more heat generating elements arranged in parallel,
wherein the conveyance means comprises a rotatable platen roller for conveying the heat-sensitive self-adhesive sheet as clamping the sheet between itself and the thermal head, and
wherein the platen roller is formed with grooves or projections at its surface thereby functioning as the remainder removing roller.

8. A thermal activation device according to Claims 2, wherein the heating means for thermal activation comprises a thermal head including one or more heat generating elements arranged in parallel,
wherein the conveyance means comprises a rotatable platen roller for conveying the heat-sensitive self-adhesive sheet as clamping the sheet between itself and the thermal head, and
wherein the cleaning means comprises the remainder removing roller, the platen roller and a replacing mechanism capable of replacing the platen roller or the remainder removing roller with the other thereby bringing either one of the rollers into an opposing relation with the thermal head.

9. A printer comprising:
the thermal activation device according to Claims 1; and
printing means for printing the heat-sensitive self-adhesive sheet.

10. A printer comprising:
the thermal activation device according to Claims 1; and
printing means comprising a thermal head including one or more heat generating elements arranged in parallel, and a rotatable platen roller for conveying the heat-sensitive self-adhesive sheet as clamping the sheet between itself and the thermal head.
